Europäisches Patentamt

(19) European Patent Office

Office européen des brevets

(11) Veröffentlichungsnummer: **0 065 097**
**B1**

(12) # EUROPÄISCHE PATENTSCHRIFT

(45) Veröffentlichungstag der Patentschrift:
09.05.84

(51) Int. Cl.³: **H 04 M 1/64,** H 04 M 19/08,
H 04 M 11/04

(21) Anmeldenummer: 82102603.6

(22) Anmeldetag: 27.03.82

(54) **An eine Fernsprechleitung angeschlossener elektronischer Textgeber.**

(30) Priorität: 14.05.81 DE 3119226

(43) Veröffentlichungstag der Anmeldung:
24.11.82 Patentblatt 82/47

(45) Bekanntmachung des Hinweises auf die Patenterteilung:
09.05.84 Patentblatt 84/19

(84) Benannte Vertragsstaaten:
AT BE CH DE FR GB IT LI LU NL SE

(56) Entgegenhaltungen:
EP - A - 0 037 573
DE - A - 2 931 254
DE - B - 2 854 516
US - A - 4 049 915

INTERFACE AGE, Band 5, Nr. 4, April 1980, Seiten 108-112, Cerritos, USA J. MacDOUGALL. "Powered down bipolar PROMs - A "cool" operating system" Seite 108,rechte Spalte, Zeile 7 - Seite 109, linke Spalte, Zeile 32; Figuren 1,2

(73) Patentinhaber: **Neumann Elektronik GmbH,
Bülowstrasse 104 - 110, D-4330 Mülheim 1 (DE)**

(72) Erfinder: **Neumann, Dirk, Dipl.-Ing., Schemelsbruch 11,
D-4330 Mülheim 1 (DE)**

(74) Vertreter: **Feder, Heinz, Dr. et al, Dominikanerstrasse 37,
D-4000 Düsseldorf 11 (DE)**

## Beschreibung

Gegenstand der Erfindung ist ein an eine Fernsprechleitung angeschlossener elektronischer Textgeber zur Abgabe vorgegebener Ansagetexte in die Fernsprechleitung, wobei die Ansagetexte in digitaler Form in Festwertspeichern gespeichert sind, denen über eine Steuereinrichtung mit einer vorgegebenen Taktfrequenz Adressenimpulse sowie Ausleseimpulse zugeführt werden und denen ein Digital-Analogwandler nachgeschaltet ist.

Derartige Textgeber sind an sich bekannt, beispielsweise aus der DE-B-2 854 516 oder DE-A-2 931 254. Sie sind beispielsweise zur Sprachausgabe über das Telefonnetz, beispielsweise bei der Auftragsentwicklung im Handel oder auch bei Anrufbeantwortern, eingesetzt worden. Ihre Steuerung kann von einer Datenverarbeitungsanlage, beispielsweise einem Mikrocomputer, aus erfolgen.

Die Umformung der in den Festwertspeichern zu speichernden Texte in digitale Sprachdaten kann dabei gemäss dem bekannten Verfahren der Delta-Modulation erfolgen. Der dem Festwertspeicher nachgeschaltete Digital-Analogwandler enthält dann einen Delta-Demodulator.

Die der Erfindung zugrunde liegende Aufgabe besteht darin, einen an eine Fernsprechleitung angeschlossenen, elektronischen Textgeber der oben angegebenen Art zu schaffen, der am Aufstellungsort unabhängig von einer zusätzlichen Stromversorgung ist, also keinen eigenen Anschluss an die Netzspannung oder eine andere Spannungsquelle benötigt. Eine derartige Unabhängigkeit des Textgebers von einer zusätzlichen Stromversorgung ist von besonderer Bedeutung, wenn der Textgeber beispielsweise Teil eines Anrufbeantworters oder einer Notrufeinrichtung ist, also einem Gerät, das auch dann betriebsbereit bleiben soll, wenn beispielsweise ein Spannungsausfall im örtlichen Netz vorliegt.

Die Lösung dieser Aufgabe erfolgt erfindungsgemäss dadurch, dass die Stromversorgung der Festwertspeicher über die Fernsprechleitung erfolgt, wobei die Speisespannungen den Festwertspeichern mit der Taktfrequenz der Adressenimpulse in Einzelimpulsen solcher zeitlichen Lage und Breite zugeführt werden, dass an jedem Festwertspeicher die Speisespannung zu einem vorgegebenen Zeitpunkt vor Eintreffen des Ausleseimpulses anliegt und mindestens während der gesamten Dauer des Ausleseimpulses eingeschaltet bleibt.

Bei der Stromversorgung der im elektronischen Textgeber angeordneten Festwertspeicher muss berücksichtigt werden, dass über die Festwertspeicher, solange die Speisespannung von 5V angelegt ist, ein relativ hoher Strom von 100mA fliesst. Da einer Fernsprechleitung im allgemeinen nur wenig elektrische Energie entnommen werden darf, ist es nicht ohne weiteres möglich, die Speisespannung für die Festwertspeicher ständig der Fernsprechleitung zu entnehmen. Der Grundgedanke der Erfindung besteht daher darin, jeden Festwertspeicher nur solange mit der Speisespannung zu beaufschlagen, wie dies unbedingt erforderlich ist. Dies führt gemäss den weiteren Merkmalen aus dem kennzeichnenden Teil des Patentanspruchs 1 dazu, dass erfindungsgemäss die Speisespannung den Festwertspeichern in einzelnen Impulsen zugeführt werden, die nur während des Zeitraums anliegen, in dem der betreffende Speicher ausgelesen wird. Auf diese Weise wird nur für die Zeit Strom verbraucht, die benötigt wird, um ein Byte auszulesen. Dadurch ist es möglich, den im Durchschnitt über die Festwertspeicher fliessenden Strom auf einen Bruchteil des Stromes zu verringern, der fliessen würde, wenn die Speicher ständig oder auch nur während des ganzen Auslesevorganges ständig eingeschaltet wären.

Verschiedene vorteilhafte Ausführungsformen des erfindungsgemässen Textgebers sind möglich und Gegenstand der Unteransprüche 2 bis 6.

So ist beispielsweise bei einer besonders vorteilhaften Ausführungsform der erfindungsgemässe elektronische Textgeber Teil eines automatischen Anrufbeantworters, wobei die gesamte Stromversorgung dieses Anrufbeantworters über die Fernsprechleitung erfolgt, so dass der Anrufbeantworter wie der Fernsprechapparat selbst in Tätigkeit bleibt, auch wenn ein örtlicher Netzausfall vorliegt.

Bei einer weiteren, in Patentanspruch 6 beschriebenen Ausführungsform ist der erfindungsgemässe elektronische Textgeber Teil einer automatischen Notrufeinrichtung, beispielsweise in einem Aufzug. Man erhält auf diese Weise eine Notrufeinrichtung, bei der die sonst übliche Kennungsanzeige, beispielsweise durch Impulse, durch eine automatische Kennungsansage ersetzt wird. Auf diese Weise wird die Einrichtung sehr störungsunempfindlich und es braucht an der Abfragestelle keine zusätzliche elektronische Einrichtung vorhanden zu sein, es genügt vielmehr ein einfacher Telefonapparat. Die Kennungsansagen sind an der Abfragestelle leicht speicherbar (Tonband) und die Einrichtung bleibt auch bei einem Netzausfall an der Sendestelle funktionsfähig.

Im folgenden wird anhand der beigefügten Zeichnungen ein Ausführungsbeispiel des elektronischen Textgebers nach der Erfindung sowie seine Anwendungsmöglichkeit in einem Anrufbeantworter näher erläutert.

In den Zeichnungen zeigen:

Fig. 1 in einem Prinzipschaltbild einen elektronischen Textgeber;

Fig. 2 in einem zeitlichen Diagramm den einem Festwertspeicher des Textgebers nach Fig. 1 zugeführten Speisespannungs- und Ausleseimpuls;

Fig. 3 in einem Prinzipschaltbild einen Anrufbeantworter mit einem Textgeber nach Fig. 1.

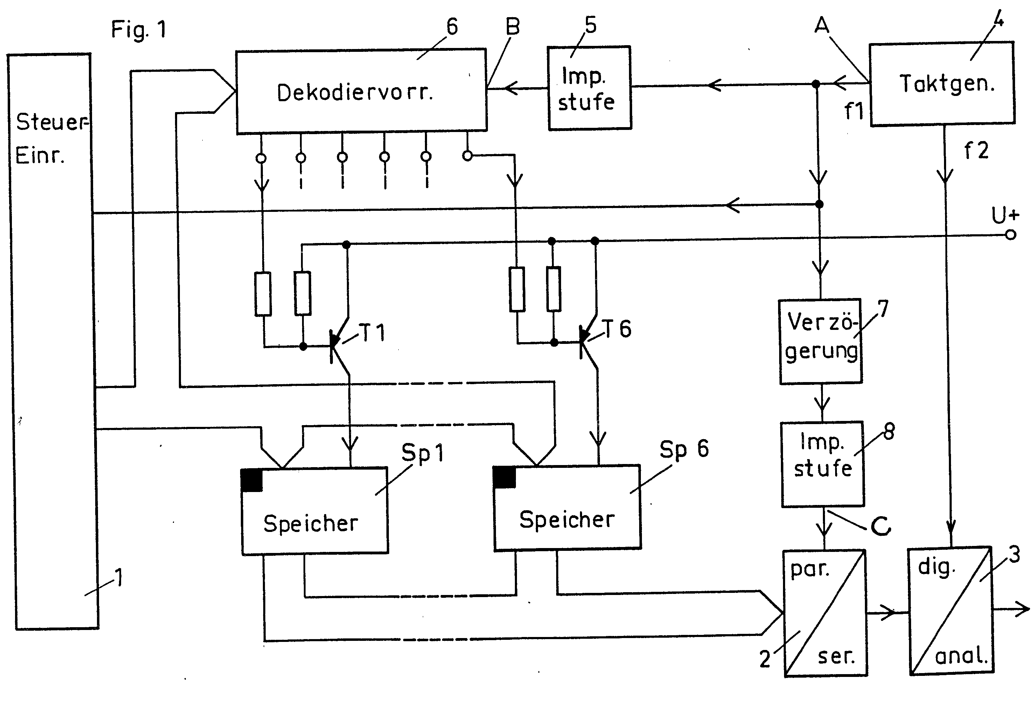

In Fig. 1 sind lediglich die für die Erfindung wesentlichen Teile eines elektronischen Textgebers in einem Blockschaltbild dargestellt.

Der Programmlauf wird von einer Steuereinrichtung 1 aus gesteuert, die je nach dem Verwendungszweck des Textgebers verschiedene Vorrichtungen zur Überwachung und Steuerung, beispielsweise einen Mikroprozessor sowie einen Speicher-Adressenzähler, enthält. Die in die Fernsprechleitung abzugebenden Ansagetexte, die sich aus einzelnen vorgegebenen Textteilen zusammensetzen können, sind nach dem bekannten Prinzip der Delta-Modulation digitalisiert und in den Festwertspeichern Sp1 bis Sp6 (z.B. ROM/EPROM) abgelegt. Die Ausgabe von Texten oder Textteilen erfolgt in der Weise, dass von der Steuereinrichtung 1 aus, gesteuert durch den Taktgenerator 4, der Inhalt eines Speichers nach dem anderen freigegeben und über einen Parallel-Seriell-Wandler 2 einem Digital-Analogwandler 3 zugeführt wird. Die Festwertspeicher Sp1 bis Sp6 sind in bekannter Weise in byteweiser Organsiation aufgebaut.

An den Digital-Anlogwandler 3 sind in acht nicht eigens dargestellter Weise weitere Vorrichtungen, wie Filter und Verstärker, angeschlossen.

Die Speisespannung für die Festwertspeicher Sp1 bis Sp6 werden vom Punkt U+ aus zugeführt, der in nicht eigens dargestellter Weise an eine Fernsprechleitung angeschlossen ist. Damit der Fernsprechleitung möglichst wenig Strom entnommen wird, wird die Speisespannung den Speichern getaktet zugeführt. Zu diesem Zweck wird vom Taktgenerator 4 aus mit der Frequenz f1 der Adressenimpulse eine Impulsstufe 5 angesteuert, die ihrerseits eine Dekodiervorrichtung 6 taktet, der von der Steuereinrichtung 1 aus die Adressensignale zugeführt werden. Die Dekodiervorrichtung 6 besitzt mehrere Ausgänge, von denen jeder einem der Speicher Sp1 bis Sp6 zugeordnet ist. Jeder dieser Ausgänge der Dekodiervorrichtung 6 ist mit der Basis eines Schalttransistors T1 bis T6 verbunden, dessen Kollektor mit dem Speisespannungseingang des ihm zugeordneten Speichers Sp1 bis Sp6 verbunden ist. Die Emitter der Schalttransistoren T1 bis T6 sind mit der Spannungsquelle U+ verbunden.

Der Parallel-Seriell-Wandler 2, über den die Auslesung der Speicher Sp1 bis Sp6 erfolgt, wird vom Taktgenerator 4 über eine Verzögerungsstufe 7 und eine Impulsstufe 8 mit der Frequenz f1 der Adressenimpulse angesteuert, während der Digital-Anlogwandler 3 vom Taktgenerator 4 aus mit der Frequenz f2 = 8× f1 angesteuert wird.

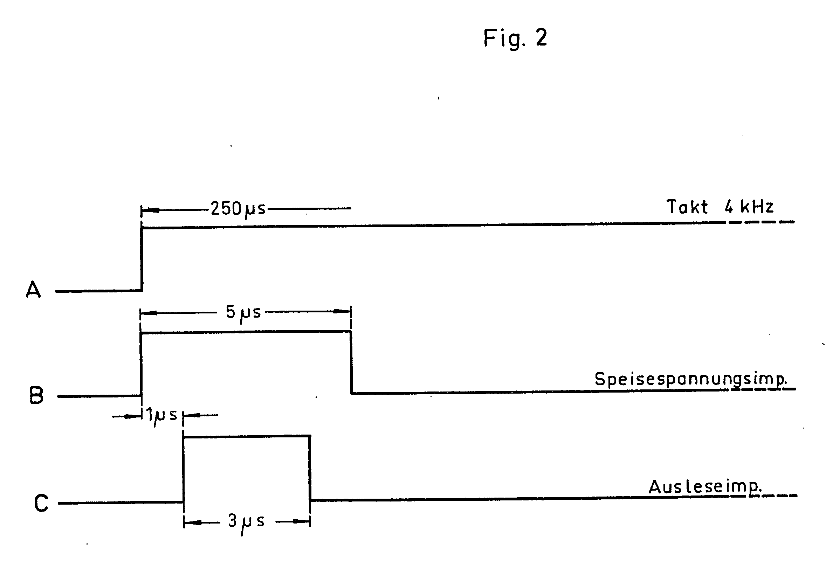

Die Funktionsweise der Schaltung zur Zuführung der Speisespannungen wird im folgenden unter Zuhilfenahme vom Fig. 2 beschrieben.

Der Taktgenerator 4 gibt Rechteckimpulse mit der Frequenz f1 von beispielsweise 4 KHz bzw. einer Impulsbreite von 250μs. Die in Fig. 1 bei A auftretende Impulsform ist in Fig. 1 unter A dargestellt. Die Impulsstufe 5 liefert am Punkt B an die Dekodiervorrichtung sechs Impulse, wie sie in Fig. 2 unter B dargestellt sind.

Die Impulse besitzen eine Breite von 5μs und sind gegenüber den Taktimpulsen A unverzögert. Die Impulsstufe 8 gibt an den als Ausleseeinrichtung fungierenden Paralell-Seriell-Wandler 2 am Punkt C Impulse ab, wie sie in Fig. 2 unter C dargestellt sind. Diese Impulse besitzen eine Breite von 3μs und sind gegenüber dem Taktimpuls um 1μs verzögert. Die Speisespannungen werden also gesteuert von der Dekodiervorrichtung 6 über die Schalttransistoren T1 bis T6 den Speichern Sp1 bis Sp6 jeweils getaktet in Impulsen von 5μs Dauer zugeführt. Somit ist jeder Speicher für die Dauer von 5μs eingeschaltet. Während dieser Einschaltzeit wird ein Ausleseimpuls von 3μs Dauer angelegt, wobei, wie in Fig. 2 dargestellt, die Verzögerung des Ausleseimpulses so ist, dass während des Auslesens der Speicher sicher eingeschaltet ist und kurz nach dem Auslesen wieder abgeschaltet wird. Da somit während des Zeitraumes eines Adressentaktes von 250μs die Speisespannung nur während des Zeitraumes von 5μs anliegt, wird der mittlere Strom, der über einen Speicher fliesst, um den Faktor 50 verringert. Dies bedeutet, dass beispielsweise eine Stromverminderung von 100 mA auf 2 mA bzw. eine Verminderung der aus der Fernsprechleitung entnommenen Energie von beispielsweise 0,5 W auf 10 mW möglich ist.

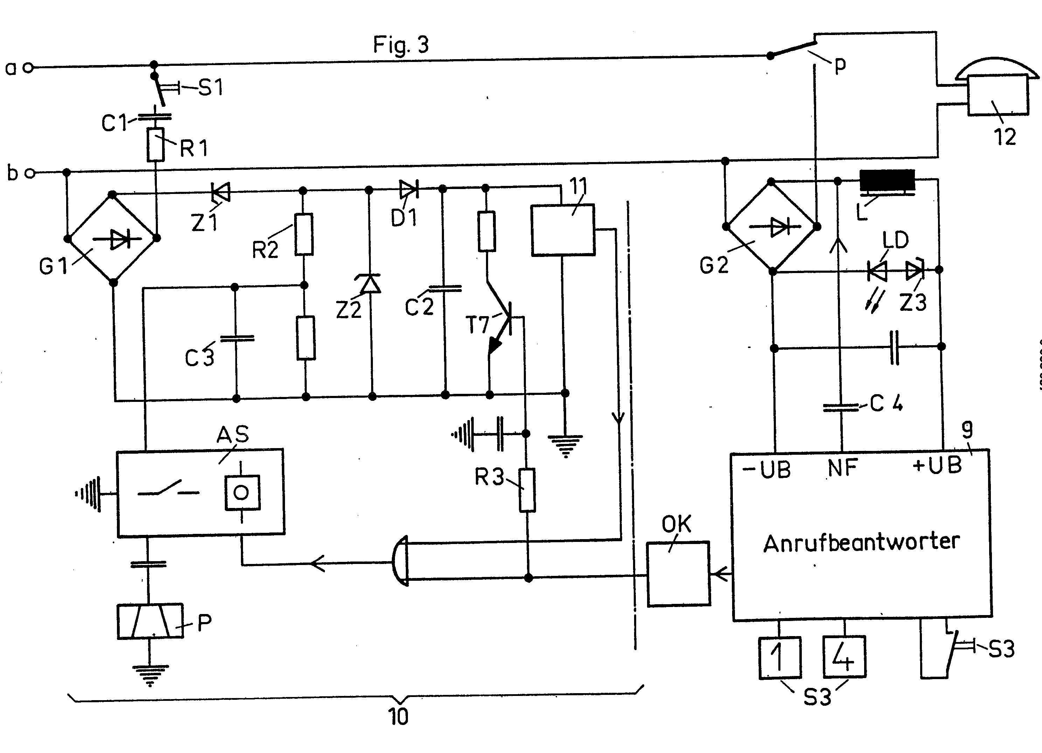

In Fig. 3 ist dargestellt, in welcher Weise ein Anrufbeantworter mit einem elektronischen Textgeber nach Fig. 1 an eine Fernsprechleitung angeschlossen werden kann.

Der im einzelnen nicht dargestellte Anrufbeantworter 9 kann dabei so aufgebaut sein, wie dies beispielsweise in der EP-A-75 854 (Veröffentlichungsdatum 18.8.82) beschrieben ist. Mit einem derartigen Anrufbeantworter ist es möglich, Ansagetexte in die Fernsprechleitung abzugeben, in denen beispielsweise eine Uhrzeit mitgeteilt wird, aus der der Anrufer ersehen kann, wann der Benutzer wieder erreichbar ist.

Zu diesem Zweck gibt der Benutzer die in die Textteile gemäss einem vorgegebenen Programm einzufügenden Ziffern der Uhrzeit an Vorwahlschaltern S3 vor. In dem in Fig. 3 dargestellten Ausführungsbeispiel ist am Vorwahlschalter S3 die Zahl «14» vorgegeben. Aufgrund des eingestellten Programms kann der Anrufbeantworter dann beispielsweise nach seiner Einschaltung von Text «Guten Tag, hier spricht ein Anrufbeantworter, bitte rufen Sie um 14.00 Uhr wieder an» in die Fernsprechleitung abgeben.

Der Anrufbeantworter 9 ist mit seinen Speisespannungseingängen +UB und −UB über eine Brücke G2 an die Fernsprechleitung «ab» über den Relaiskontakt p anschliessbar. Ebenso ist der NF-Ausgang des Anrufbeantworters 9 über den Kondensator C4 und die Brücke G2 an die Fernsprechleitung «ab» anschliessbar. Gleichfalls an die Fernsprechleitung «ab» anschliessbar ist eine Ruf-Auswerteschaltung 10, durch welche der Anrufbeantworter 9 in der im folgenden näher beschriebenen Weise ein- und abschaltbar ist.

Im einzelnen ist bei der in Fig. 3 dagestellten Schaltung ein Telefon 12 an die Fernsprechleitung «ab» angeschlossen. Bei Betätigung des Schalters S1 gelangt bei einem Anruf die Rufspannung über den Kondensator C1 und den Widerstand R1 zur Gleichrichterbrücke G1. Der über die Zenerdiode Z1 und eine weitere Diode D1 fliessende Gleichstrom lädt den Kondensator C2 auf, wobei über die weitere Zenerdiode Z2 eine Spannungsstabilisation erreicht wird. Bei Erreichen einer bestimmten Spannungsschwelle erzeugt ein Gleichspannungswächter 11 einen Richtimpuls, der über ein ODER-GATTER O einer einen Zähler enthaltenden Relais-Anschaltstufe AS zugeführt wird und den Zähler auf O setzt. Beim zweiten ankommenden Rufsignal gelangt ein Teil der Rufspannung über den Widerstand R2 und den Kondensator C3 direkt auf die Relais-Anschaltstufe AS und setzt den Zähler eine Stufe weiter. Je nach der Voreinstellung des Zählers wird von der Relais-Anschaltstufe AS aus während eines folgenden Rufsignals das bistabile Relais P gesetzt und damit über den Kontakt p die Gleichrichterbrücke G2 an die Fernsprechleitung «ab» angeschlossen. Über diese Gleichstrombrücke G2 fliesst dann polungsunabhängig ein Gleichstrom durch die Drossel L, und an den Punkten –UB und +UB liegt stabilisiert durch die Zenerdiode Z3 die Speisespannung am Anrufbeantworter 9 an. Dieser ist dadurch eingeschaltet und der vorprogrammierte Ansagetext wird beispielsweise zweimal vom Ausgang NF aus auf die Fernsprechleitung «ab» gegeben. Nach dem Ende des Ansagetextes wird vom Anrufbeantworter 9 ein Signal über einen Optokoppler OK und das ODER-Gatter O auf die Relais-Anschaltstufe AS gegeben, die das bistabile Relais P zurück in die Ruhestellung schaltet, was zur Folge hat, dass nunmehr über den Kontakt p anstelle des Anrufbeantworters 9 wieder der Fernsprechapparat 12 mit der Fernsprechleitung «ab» verbunden ist. Das vom Anrufbeantworter 9 über den Optokoppler OK abgegebene Signal gelangt über den Widerstand R3 auf die Basis eines Schalttransistors T7, der daraufhin durchschaltet und den Kondensator C2 entlädt. Nun sind die Anfangsbedingungen wieder hergestellt und die Rufauswerteschaltung 10 ist bereit, auf das nächste ankommende Rufsignal hin gegebenenfalls den Anrufbeantworter 9 wiederum einzuschalten.

Mittels des am Anrufbeantworter 9 angeordneten Rückstellschalters S2 kann der Anrufbeantworter von Hand rückgestellt werden, so dass der Benutzer jederzeit auch bei laufendem Spruch den Anrufbeantworter abschalten und den Anruf direkt am Fernsprechapparat 12 entgegennehmen kann.

Eine Leuchtdiode LD am Anrufbeantworter 9 zeigt an, dass der Anrufbeantworter in Betrieb ist.

**Patentansprüche**

1. An eine Fernsprechleitung angeschlossener elektronischer Textgeber zur Abgabe vorgegebener Ansagetexte in die Fernsprechleitung, wobei die Ansagetexte in digitaler Form in Festwertspeichern (Sp1–Sp6) gespeichert sind, denen über eine Steuereinrichtung (1) mit einer vorgegebenen Taktfrequenz (f1) Adressenimpulse sowie Ausleseimpulse zugeführt werden und denen ein Digital-Analogwandler (3) nachgeschaltet ist, dadurch gekennzeichnet, dass die Stromversorgung der Festwertspeicher (Sp1 bis Sp6) über die Fernsprechleitung (a, b) erfolgt, wobei die Speisespannungen den Festwertspeichern (Sp1 bis Sp6) mit der Taktfrequenz (f1) der Adressenimpulse in Einzelimpulsen solcher zeitlichen Lage und Breite zugeführt werden, dass an jedem Festwertspeicher (Sp1 bis Sp6) die Speisespannung (U+) zu einem vorgegebenen Zeitpunkt vor Eintreffen des Ausleseimpulses anliegt und mindestens während der gesamten Dauer des Ausleseimpulses eingeschaltet bleibt.

2. Elektronischer Textgeber nach Anspruch 1, dadurch gekennzeichnet, dass der Speisespannungs-Eingang jedes Festwertspeichers (Sp1 bis Sp6) mit einer Spannungsquelle (U+) jeweils über ein elektronisches Schaltglied (T1 bis T6) verbunden ist, dessen Ansteuer-Eingang mit einem Ausgang einer Dekodiervorrichtung (6) verbunden ist, die über eine Impulsstufe (5) direkt an einen Taktgenerator (4) angeschlossen ist, während die Ausleseeinrichtung (2) über eine weitere Impulsstufe (8) und eine Verzögerungsstufe (7) mit dem Taktgenerator (4) verbunden ist.

3. Elektronischer Textgeber nach Anspruch 1 oder 2, dadurch gekennzeichnet, dass er Teil eines automatischen Anrufbeantworters (9) ist, dessen Stromversorgung über die Fernsprechleitung (a, b) erfolgt, und der über eine Rufauswerteschaltung (10) ein- und ausgeschaltet wird, die mit den über die Fernsprechleitung eintreffenden Rufsignalen betrieben wird.

4. Elektronischer Textgeber nach Anspruch 3, dadurch gekennzeichnet, dass die Rufauswerteschaltung (10) ein bistabiles Relais (P) aufweist, sowie eine mit einem Zähler versehene Relais-Anschaltstufe (A, S), durch welche das Relais (P) nach einer vorgegebenen Anzahl von Rufsignalen gesetzt und damit der Anrufbeantworter (9) eingeschaltet wird, der nach Beendigung der Ansage ein Rücksetzsignal an die Relais-Anschaltstufe (A, S) abgibt.

5. Elektronischer Textgeber nach Anspruch 4, dadurch gekennzeichnet, dass die Rufauswerteschaltung (10) einen Speicherkondensator (C2) und einen Spannungswächter (11) aufweist und das erste eintreffende Rufsignal zur Aufladung des Speicherkondensators (C2) dient, wobei der Spannungswächter (11) ein Rücksetzsignal an die Relais-Anschaltstufe (A, S) gibt, und die folgenden Rufsignale dem Zähleingang der Relais-Anschaltstufe (A, S) zugeführt werden.

6. Elektronischer Textgeber nach Anspruch 1 oder 2, dadurch gekennzeichnet, dass er Teil einer automatischen Notrufeinrichtung ist, deren Stromversorgung über die Fernsprechleitung erfolgt und die bei Auslösung des Notrufes einen vorgegebenen Kennungs-Ansagetext in die Fernsprechleitung abgibt.

## Revendications

1. Emetteur de texte raccordé à un circuit téléphonique pour la transmission de textes prédéfinis d'informations par le circuit téléphonique, où les textes d'informations sont mémorisés sous forme numérique dans des mémoires mortes (Sp1–Sp6), auxquelles sont appliquées, par un appareil de commande (1) à une fréquence d'horloge prédéterminée (fl), des impulsions d'adresse ainsi que des impulsions de lecture et que suit un convertisseur numérique-analogique (3), caractérisé en ce que l'alimentation en courant des mémoires mortes (Sp1 à Sp6) se produit par le circuit téléphonique (a, b) et que les tensions d'alimentation sont appliquées aux mémoires mortes (Sp1 à Sp6) à la fréquence d'horologe (f1) des impulsions d'adresse, en impulsions isolées à une position dans le temps et une largeur telles qu'à chaque mémoire morte Sp1 à Sp6), la tension d'alimentation (U+) soit appliquée en un temps prédéterminé avant l'arrivée de l'impulsion de lecture et le reste au moins pendant toute la durée de l'impulsion de lecture.

2. Emetteur électronique de texte selon la revendication 1, caractérisé en ce que l'entrée de tension d'alimentation de chaque mémoire morte (Sp1 à Sp6) est reliée à une source de tension (U+), par un organe électronique de commutation (T1 à T6), dont l'entrée de commande est reliée à la sortie d'un décodeur (6), qui est raccordé directement, par un étage impulsionnel (5), à un générateur d'impulsions d'horloge (4), tandis que le dispositif de lecture (2) est relié par un autre étage impulsionnel (8) et un étage retardateur (7), au générateur d'impulsions d'horologe (4).

3. Emetteur électronique de texte selon l'une quelconque des revendications 1 ou 2, caractérisé en ce qu'il fait partie d'un répondeur téléphonique automatique (9), dont l'alimentation en courant se produit par le circuit téléphonique (a, b) et qui est mis en circuit et hors circuit au moyen d'un circuit d'exploitation de l'appel (10), qui fonctionne au moyen des signaux d'appel arrivant par le circuit téléphonique.

4. Emetteur électronique de texte, caractérisé en ce que le circuit d'exploitation de l'appel (10) présente un relais bistable (P), ainsi qu'un étage de commutation de relais (A, S) pourvu d'un compteur, par lequel le relais (P) est établi après un nombre prédéterminé de signaux d'appel et ainsi le répondeur téléphonique (9) est mis en circuit, qui applique, à la fin de l'information, un signal de rétablissement à l'étage de commutation de relais (A, S).

5. Emetteur électronique de texte selon la revendication 4, caractérisé en ce que le circuit d'exploitation de l'appel (10) présente un condensateur d'accumulation (C2) et un contrôleur de tension (11) et en ce que le premier signal reçu sert à charger le condensateur accumulateur (C2), le contrôleur de tension (11) appliquant un signal de rétablissement à l'étage de commutation de relais (A, S), les signaux suivants d'appel étant appliqués à l'entrée de comptage de l'étage de commutation de relais (A, S).

6. Emetteur électronique de texte selon la revendication 1 ou 2, caractérisé en ce qu'il fait partie d'une installation automatique d'appel de détresse, dont l'alimentation en courant se produit par le circuit téléphonique et qui, lors du déclenchement de l'appel de détresse, transmet un texte d'information d'identification prédéterminé par le circuit téléphonique.

## Claims

1. Electronic text transmitter connected to a telephone line, for emitting predetermined announcement texts into said telephone line, said announcement texts being stored in digital form in set-value memories (Sp1 to Sp6) to which address pulses as well as read-out pulses are fed through a control unit (1) at a given clock frequency (f1), whereby said set-value memories (Sp1 to Sp6) are followed by a digital/analog converter (3), characterized in that the current supply to said set-value memories (Sp1 to Sp6) is effected through said telephone line (a, b), whereby the supply voltages are fed to said set-value memories (Sp1 to Sp6) at the clock frequency (f1) of said address pulses in separate pulses of such chronological position and with that, at each of said set-value memories (Sp1 to Sp6), the supply voltage (U+) is available at a predtermined point of time prior to the arrival of the read-out pulse and remains effective for at least the entire duration of said read-out pulse.

2. Electronic text transmitter as claimed in claim 1, characterized in that the supply voltage input of each of the set-value memories (Sp1 to Sp6) is connected to a voltage source (U+) through an electronic switching element (T1 to T6) the control input of which is connected with an output of a decoder unit (6) which – through a pulse unit (5) – is directly connected to a clock generator (4) whereas the read – out unit (2) is connected with said clock generator (4) through a further pulse unit (8) and a delay unit (7).

3. Electronic text transmitter as claimed in claim 1 or 2, characterized in that it forms part of an automatic telephone responder (9) to which the current supply is effected through the telephone line (a, b), and which is switched on and off through a call-evaluating circuit (10) operated by means of the call signals arriving through said telephone line.

4. Electronic text transmitter as claimed in claim 3, characterized in that that the call-evaluating circuit (10) comprises a bistable relay (P) as well as a relaysetting unit (AS) including a counter, said relay (P) being set by said relay-setting unit (AS) after a predetermined number of call signals whereby the telephone responder (9) is switched on, said telephone responder (9), after emitting the announcement, transmitting a return signal to said relay-setting unit (AS).

5. Electronic text transmitter as claimed in claim 4, characterized in that the call-evaluating circuit (10) comprises a storage capacitor (C2) and a voltage controller (11), and that the first incoming call signal serves for charging said storage capacitor (C2), whereby said voltage controller (11) transmits a return signal to the relay-setting unti (AS), and whereby the subsequent call signals are transmitted to the counting input of said relay-setting unit (AS).

6. Electronic text transmitter as claimed in claim 1 of 2, characterized in that it forms part of an automatic emergency call equipment to which the current supply is effected through the telephone line, and which, upon release of the emergency call, emits a predetermined characteristic announcement text into said telephone line.

Fig. 1

Steuer-Einr.

Dekodiervorr. 6 B

Imp. stufe 5

A f1

Taktgen. 4

f2

U+

Verzö-gerung 7

T1

T6

Imp. stufe 8

Sp1

Sp 6

Speicher

Speicher

C

1

par. / ser. 2

dig. / anal. 3

0065 097

Fig. 2

Fig. 3

0 065 097